# EUROPEAN PATENT APPLICATION

(11) **EP 1 760 699 A1**
(43) Date of publication of application: **07.03.2007**
(21) Application number: 06254457.2
(22) Date of filing: 25.08.2006
(51) Int. Cl.: G11B 5/73, G11B 5/84

(54) **Substrate for magnetic information recording medium, and producing method of substrate for magnetic information recording medium**

(30) Priority: 30.08.2005 JP 2005249878
(71) Applicant: Konica Minolta Opto, Inc., Hachioji-shi, Tokyo 192-8505 (JP)
(72) Inventor: Nakano, Satoshi, Hachioji-shi Tokyo 192-8505 (JP); Kobayashi, Hajime, Hachioji-shi Tokyo 192-8505 (JP); Masaki, Yoshiharu, Hachioji-shi Tokyo 192-8505 (JP); Kawai, Hideki, Hachioji-shi Tokyo 192-8505 (JP)
(74) Representative: Roberts, Mark Peter

(57) **Abstract**

The present invention provides a substrate for a magnetic information recording medium and a producing method of the substrate for a magnetic information recording medium. The substrate for a magnetic information recording medium includes: a base plate in a disk shape comprising a resin material; and a covering layer formed on a surface of the base plate.

## Description

This application is based on Japanese Patent Application No. 2005-249878 filed on August 30, 2005, in Japanese Patent Office, the entire content of which is hereby incorporated by reference.

### TECHNICAL FIELD

The present invention relates to a substrate for a magnetic information recording medium used as a substrate for a magnetic disk recording apparatus and a producing method of the same substrate. Specifically, the present invention relates to a substrate for a magnetic information recording medium including a resin base plate.

### BACKGROUND

An aluminum-base alloy or glass disk is used as a substrate for a magnetic disk recording apparatus, such as hard disk, which is used in a computer. A thin metallic, magnetic film is formed on that substrate, and the thin metallic, magnetic film is magnetized by a magnetic head thereby recording information.

A magnetic head for reading magnetic recorded information that has been recorded on a magnetic information recording medium is designed such that the magnetic head moves while it is floating above the surface of the magnetic information recording medium. If the surface of a magnetic information recording medium becomes rough, the magnetic head collides with the asperity when the magnetic head moves, which may cause damage to the magnetic head or a magnetic information recording medium. To prevent this problem from occurring, there is an attempt to grind and polish an aluminum or glass substrate to such a high degree during the production procedure so as to create a smooth surface which prevents creation of asperity on the surface of the substrate, (for example, see FIG. 4 and FIG. 5 in published unexamined Japanese patent application No. 2003-54965, published unexamined Japanese patent application No. 2003-55001, and published unexamined Japanese patent application No. 2000-163740).

For example, when using an aluminum substrate, an aluminum plate is first made into a disc by means of pressure molding, and its surface is then finely ground, highly polished and carefully cleaned so as to become smooth; subsequently the surface of the aluminum plate is plated, for example with Ni-P, polished, textured, and then sputtered to form a cobalt-base alloy magnetic layer on the surface. Thus, a magnetic information recording medium is produced.

In the case of a glass substrate, glass material is first melted, and then the molten glass is pressure-molded to form a disc-shaped glass substrate. Then, the surface of the glass substrate is highly accurately ground, polished and cleaned to become smooth. Subsequently, the surface is chemically reinforced by means of an ion exchange using alkali molten salt, precisely cleaned, textured, and then sputtered to form a cobalt-base alloy magnetic layer on the surface. Thus, a magnetic information recording medium is produced.

As stated above, the surface of the aluminum substrate or glass substrate becomes smooth by repeating the grinding and polishing processes and the cleaning process. However, because the grinding and polishing processes to make the substrate surface smooth are laborious and the surface of the substrate is very rough after the pressure molding process and before the grinding and polishing processes, it takes considerably long periods of time for the grinding and polishing processes to obtain the surface roughness required for magnetic information recording medium substrate. As a result, substrate production costs become high, causing an increase in the price of the magnetic information recording medium. For example, when the surface roughness of an aluminum substrate or a glass substrate is referred to as Ra, the final surface roughness Ra ≤ 1 nm is to be required. To satisfy this requirement, it is necessary to conduct a lengthy and accurate grinding and polishing processes. Herein, the "surface roughness Ra" is an arithmetic average roughness Ra which is a "surface roughness" prescribed by JIS B0601.

In the case of a small, portable magnetic disk recording apparatus of 2.5 inches, 1 inch, or 0.85 inches, if an impact is imposed on the apparatus, the impact is also imposed on the magnetic information recording medium causing damage to the magnetic information recording medium; as a result, a glass substrate or an aluminum substrate may become damaged or deformed. This is a problem. Furthermore, there is another problem in that a glass substrate is easily broken during the magnetic information recording medium production process.

Moreover, although it is required that a portable magnetic disk recording apparatus be light in order to accommodate portability, an aluminum substrate or a glass substrate itself is relatively heavy; therefore, when an aluminum substrate or a glass substrate is used for a portable recording apparatus, it is difficult to reduce the weight of the apparatus.

### SUMMARY

An objective of the present invention is to solve the above problems and provide a substrate for a magnetic information recording medium that can be made to eliminate the polishing process during the production procedure by using a resin base plate as a base material for the substrate for the magnetic information recording medium.

Furthermore, another objective of the present invention is to provide a substrate for a magnetic information recording medium which is not easily broken and enables the magnetic disk recording apparatus to be light.

An inventor of this application has focused on the characteristics of resin base plate. The inventor produced a disc-shaped resin base plate by molding resin, and then formed a covering layer on the surface of the resin base plate thereby creating a substrate for a magnetic information recording medium.

Since a resin base plate is made by injection molding or cast molding, dimensional accuracy and surface accuracy of the base plate depend on the surface accuracy and molding conditions of a die used for injection molding or other molding techniques. Therefore, by using a precisely machined die and accurately controlling the molding process, it is possible to accurately mass-produce base plates of excellent dimension and uniform smooth surface quality. For example, it is possible to reduce surface roughness Ra of the resin base plate to 10 nm or less. This can eliminate the polishing process. Furthermore, even if grinding and polishing processes are necessary after a molded base plate has been taken out to achieve desired surface accuracy (surface roughness or undulation) or dimensional accuracy, polishing, grinding and cleaning processes can be largely reduced when compared to those polishing, grinding and cleaning processes in the production procedure of substrate that uses a glass or aluminum base material. As a consequence, it is possible to reduce production costs. Then, a substrate for a magnetic information recording medium is created by forming a covering layer on the resin base plate. If a substrate for a magnetic information recording medium does not have the desired surface accuracy (for example, surface roughness Ra of 1 nm or less) after the covering layer has been formed, polishing the covering layer helps attain the desired surface accuracy. Finally, a magnetic layer is formed on the substrate for a magnetic information recording medium as state above, thereby creating a magnetic information recording medium.

### BRIEF DESCRIPTION OF THE DRAWINGS

Embodiments will now be described, by way of example only, with reference to the accompanying drawings which are meant to be exemplary, not limiting, and wherein like elements numbered alike in several Figures, in which:
FIGs. 1(a) through 1(c) show schematic diagrams of a substrate for a magnetic information recording medium of a first embodiment according to the present invention;
FIGs. 2(a) and 2(b) show cross-sectional views of a substrate for a magnetic information recording medium of a second embodiment according to the present invention; and
FIGs. 3(a) through 3(c) show cross-sectional views of a base plate being a base material for a substrate for a magnetic information recording medium of a third embodiment according to the present invention; and
FIG. 4 shows a cross-sectional view of a substrate for a magnetic information recording medium of an embodiment according to the present invention.

### DESCRIPTION OF THE PREFERRED EMBODIMENT

The preferred embodiments according to the present invention is described below.
Item 1 is a substrate for a magnetic information recording medium including: a base plate in a disk shape comprising a resin material; and a covering layer formed on at least one surface of the base plate.
Item 2 is the substrate of Item 1, in which the covering layer is formed on each of opposite surfaces of the base plate.
Item 3 is the substrate of Item 1 or 2 further including: an intermediate layer formed between the base plate and the covering layer.
Item 4 is the substrate of Item 3, in which the intermediate layer comprises a resin material formed by being applied on the base plate.
Item 5 is the substrate of Item 3 or 4, in which the intermediate layer includes a plurality of particles.

In this structure, the plurality of particles in the intermediate layer may be formed of a material which is different from a material surrounding the particles.
Item 6 is the substrate of Item 5, in which the plurality of particles comprise at least one of metal, semiconductor, oxide, carbide, nitride, phosphide, sulfide, carbonate, phosphate, sulfate, nitrate, fluoride, chloride, bromide, glass, glass fiber, carbon fiber, carbon power, carbon nanotube, and fullerene.
Item 7 is the substrate of Item 5, in which the plurality of particles are resin particles comprising a material different from a material surrounding the plurality of particles.
Item 8 is the substrate of any one of Items 1 to 7, in which the base plate includes a plurality of particles.

In this structure, the plurality of particles in the base plate may be formed of a material which is different from a material surrounding the particles.
Item 9 is the substrate of Item 8, in which the plurality of particles comprise at least one of metal, semiconductor, oxide, carbide, nitride, phosphide, sulfide, carbonate, phosphate, sulfate, nitrate, fluoride, chloride, bromide, glass, glass fiber, carbon fiber, carbon power, carbon nanotube, and fullerene.
Item 10 is the substrate of Item 8, in which the plurality of particles are resin particles comprising a material different from a material surrounding the plurality of particles.
Item 11 is the substrate of any one of Items 1 to 10, in which the base plate comprises a surface with a surface roughness of 10 nm or less.
Item 12 is the substrate of any one of Items 1 to 11, wherein the resin material forming the base plate has a glass transition temperature Tg of 200 °C or more.
Item 13 is the substrate of any one of Items 1 to 12, in which the base plate is formed by one of an injection molding, a cast molding, a sheet forming, an injection compression molding, and a compression molding.
Item 14 is the substrate of Item 13, in which the base plate comprises an opening formed at a center of the base plate.
Item 15 is the substrate of Item 14, in which at last one of an inner diameter dimension, an outside diameter dimension, an internal circumference shape, and an outer circumference shape of the base plate is formed when the base plate is formed.
Item 16 is the substrate of any one of Items 1 to 15, in which the covering layer comprises at least one of a metal layer, a ceramic layer, a magnetic layer, a glass layer, and a composite layer formed of an inorganic layer and an organic layer.
Item 17 is the substrate of any one of Items 1 to 15, in which the covering layer comprises one of a metal layer including at least one of a component selected from Ni (nickel), Fe (iron), Cu (copper), Ti (titanium), P (phosphorus), Co (cobalt), Si (silicon), Sn (tin), Pd (palladium), Zn (zinc), Ga (gallium), Ge (germanium), and Mn (manganese); a ceramic layer; and a magnetic layer.
Item 18 is the substrate of any one of Items 1 to 17, in which the covering layer comprises a plurality of layers whose components are different each other.
Item 19 is the substrate of any one of Items 1 to 17, in which a component of the covering layer changes gradually from a surface of the covering layer facing the base plate to a top surface of the covering layer.
Item 20 is the substrate of any one of Items 1 to 19, in which a surface of the covering layer facing the base plate has hardness lower than that of a top surface of the covering layer.
Item 21 is the substrate of any one of Items 1 to 20, in which the covering layer has a surface roughness Ra of 1 nm or less.
Item 22 is the substrate of any one of Items 1 to 21, in which the covering layer comprises a polished surface.
Item 23 is the substrate of any one of Items 1 to 22, in which a center portion of the base plate is thicker than a peripheral portion of the base plate.
Item 24 is the substrate of Item 23, in which a thickness of the base plate gradually reduces from the center portion to the peripheral portion.
Item 25 is a producing method of a substrate for a magnetic information recording medium, the producing method comprising the steps of: forming a base plate in a disk shape comprising a resin material; forming a covering layer on at least one surface of the base plate; and polishing a surface of the covering layer.
Item 26 is a producing method of a substrate for a magnetic information recording medium, the producing method comprising the steps of: forming a base plate in a disk shape comprising a resin material; forming an intermediate layer on at least one surface of the base plate; forming a covering layer on the intermediate layer; and polishing a surface of the covering layer.
Item 27 is a producing method of a substrate for a magnetic information recording medium of Item 25 or 26, in which the base plate is formed by one of an injection molding, a cast molding, a sheet forming, an injection compression molding, and a compression molding in the step of forming the base plate.
Item 28 is a producing method of a substrate for a magnetic information recording medium of Item 27, in which the base plate is formed with an opening at a center of the base plate in the step of forming the disk-shaped base plate.
Item 29 is a producing method of a substrate for a magnetic information recording medium of Item 28, in which at least one of an inner diameter dimension, an outside diameter dimension, an inner edge shape, or an outer edge shape of the base plate is formed in the step of forming the base plate.

According to an embodiment of the present invention, because a molded resin base plate is provided, it is possible to obtain a base plate with high dimensional quality and excellent surface roughness in an additional process after the molded substrate has been taken out; consequently processing can be reduced. Even if grinding and polishing processes are necessary after a molded substrate has been taken out to achieve desired surface accuracy (surface roughness or undulation) or dimensional accuracy, processing can be largely simplified when compared to the processing in the production procedure of a substrate that uses glass or aluminum for a base material. As a consequence, productivity increases thereby making it possible to reduce costs for producing magnetic recording media.

Furthermore, a molded resin base plate is not easily broken and is relatively light when compared to a glass substrate or an aluminum substrate made according to conventional technology, which makes it possible to create a light-weight magnetic information recording medium and a light-weight magnetic disk recording apparatus. Moreover, when a magnetic information recording medium is light, it is possible to accordingly reduce power consumed by the magnetic disk recording apparatus.

Furthermore, because a resin base plate may be made by injection molding or cast molding, it is relatively easy to create base plates that have complicated shapes by making dies of a desired shape and controlling the molding process. Moreover, a pattern may be directly formed on a resin base plate by simply making a die that incorporates the pattern.

Furthermore, it is possible to increase the adhesiveness between a resin base plate and a covering layer by providing an intermediate layer between the resin base plate and the covering layer. Moreover, the surface of the resin base plate can be smoothed by providing an intermediate layer. It is possible to increase hardness of the substrate for a magnetic information recording medium by increasing hardness of the intermediate layer.

Furthermore, it is possible to increase surface roughness of a resin base plate by mixing particles into a resin base plate. As a result, the strength characteristic of the resin base plate can be increased, and an optimal surface shape can be simultaneously obtained by adding a roughness control function, thereby making it possible to increase the adhesiveness between the resin base plate and the covering layer. Moreover, when an intermediate layer is formed, mixing particles into the intermediate layer can increase the adhesiveness between the intermediate layer and the covering layer.

Here, particles mixed into the resin base plate or the intermediate layer may be particles formed of a material different from a material surrounding the particles, or may be particles formed of the same material as a material surrounding the particles.

Moreover, by making the central portion of the resin base plate thicker than the circumferential portion of the base plate, it is possible to reduce wobbling of the magnetic information recording medium caused by rotation when the magnetic information recording medium is rotated in a magnetic disk recording apparatus. Furthermore, tracking performance of the magnetic head can be increased.

While the preferred embodiments of the present invention have been described using specific terms, such description is for illustrative purposes only, and it is to be understood that changes and variations may be made without departing from the sprit or scope of the appended claims.

Hereafter, a substrate for a magnetic information recording medium of an embodiment according to the present invention and its production method will be explained.

### [First embodiment]

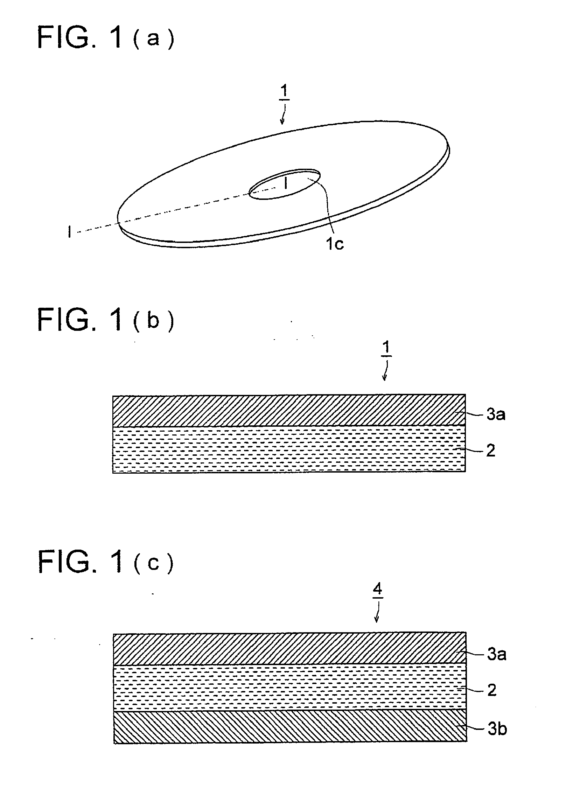

First of all, a substrate for a magnetic information recording medium of a first embodiment according to the present invention will be described with reference to FIGs. 1(a) to 1(c). FIGs. 1(a) to 1(c) are schematic diagrams of a substrate for a magnetic information recording medium of a first embodiment according to the present invention; and FIG. 1(a) shows a perspective view of a substrate for a magnetic information recording medium, and FIGs. 1(b) and 1(c) are cross-sectional views taken along line I-I in FIG. 1(a).

As shown in a perspective view in FIG. 1(a), the substrate 1 for a magnetic information recording medium is in a disc shape, which has a hole 1c at the center, and used as a substrate for a magnetic information recording medium such as hard disk.

As shown in a cross-sectional view in FIG. 1(b), a substrate 1 for a magnetic information recording medium includes a resin base plate 2 which is made of resin and shaped like a disc, and a covering layer 3a is formed on the surface of one side of the resin base plate 2. In the first embodiment, the surfaces of both sides of the resin base plate 2 are made flat and horizontal.

When making a magnetic information recording medium by using a substrate 1 for a magnetic information recording medium, a magnetic layer is formed on the covering layer 3a thereby creating a magnetic information recording medium. For example, the procedures are: the covering layer 3a is polished and a cobalt-base alloy magnetic layer is then formed on the polished covering layer 3a by the sputtering technique.

Thermoplastic resin, thermosetting resin, active ray-curable resin, and other various kinds of resins can be used for a resin base plate 2.

For example, thermoplastic resin that can be used as a resin base plate 2 may include the following: polycarbonate, polyether ether ketone resin (PEEK resin), cyclic polyolefin resin, metacrylate styrene resin (MS resin), polystyrene resin (PS resin), polyetherimide resin (PEI resin), ABS resin, polyester resin (PET resin, PBT resin, etc.), polyolefin resin (PE resin, PP resin, etc.), polysulfone resin, polyether sulfone resin (PES resin), polyalylate resin, polyphenylene sulfide resin, polyamide resin, or acrylic resin. Furthermore, thermosetting resin that can be used as a resin base plate 2 includes the following: phenol resin, urea resin, unsaturated polyester resin (BMC resin, etc.), silicone resin, urethane resin, epoxy resin, polyimide resin, polyamide-imide resin, or polybenzoimidazole resin. In addition, polyethylene naphthalate resin (PEN resin) can also be used.

Furthermore, ultraviolet-curable resin can be used as active ray-curable resin. For example, ultraviolet-curable resin includes the following: ultraviolet-curable acrylic urethane resin, ultraviolet-curable polyester acrylate resin, ultraviolet-curable epoxy acrylate resin, ultraviolet-curable polyol acrylate resin, ultraviolet-curable epoxy resin, ultraviolet-curable silicon resin, or ultraviolet-curable acrylic resin.

To effectively achieve the purpose of the present invention, it is preferable that a photoinitiator be used to accelerate the curing reaction before radiating an active ray to cure the coated layer. At this point in time, a photosensitizing agent may simultaneously be used.

When oxygen in the air suppresses the above curing reaction, it is possible to radiate an active ray within an atmosphere of inactive gas in order to decrease oxygen concentration or eliminate oxygen. Although an infrared ray, visible light, or ultraviolet ray can be used as an active ray, it is preferable to use an ultraviolet ray. However, it does not mean that an active ray is limited to the ultraviolet ray. Furthermore, it is possible to enhance the curing reaction by applying heat before, during, or after the irradiation of an active ray.

Furthermore, for a resin base plate 2, liquid crystalline polymer or organic/inorganic hybrid resin (for example, macromolecular component with silicon included as a backbone substance) can be used. However, the above-mentioned resin is an example of resins that can be used for a resin base plate 2, and a resin base plate according to the present invention is not intended to be limited to those kinds of resin materials. Two or more different kinds of resin materials may be mixed to form a resin base plate. Furthermore, different components used for different layers may be adjacent to each other thereby forming a resin base plate.

A resin base plate 2 can be made by means of injection molding, cast molding, sheet forming, injection compression molding, or compression molding. Moreover, a molded resin base plate can be cut, punched, or pressure-molded whenever necessary to create a resin base plate 2.

Furthermore, when a resin base plate 2 is created by the above-mentioned injection molding or other techniques, at least one of the following in the resin base plate 2 can be simultaneously formed: the dimension of the inner diameter, dimension of the outside diameter, shape of the internal circumference, or shape of the outer circumference. That is, a die used for injection molding is created in accordance with the dimension of the inner diameter and/or the outside diameter of the resin base plate 2; and by using the die, the desired inner diameter and/or outside diameter has been achieved when the resin base plate is molded. Furthermore, a die is created in accordance with the shape of the internal circumference and/or outer circumference of the resin base plate 2; and by using the die, the desired shape of the internal circumference and/or outer circumference has been achieved at the time when the resin base plate is molded.

As a covering layer 3a, a metal layer, ceramic layer, magnetic layer, glass layer, or a compound layer (hybrid layer) which combines an inorganic layer with an organic layer is used. Specific components contained in a covering layer 3a including at least one of a component selected from Ni (nickel), Fe (iron), Cu (copper), Ti (titanium), P (phosphorus), Co (cobalt), Si (silicon), Sn (tin), Pd (palladium), Zn (zinc), Ga (gallium), Ge (germanium), and Mn (manganese).

Because the surface of the covering layer 3a is polished as necessary in order to achieve desired surface accuracy (for example, surface roughness Ra ≤ 1 nm) before a magnetic layer is formed on a substrate 1 for a magnetic information recording medium, the covering layer 3a must be formed by including the amount of cover that will be removed during the polishing process. For example, when the covering layer 3a is not polished, the thickness of the covering layer 3a is between 0.01 and 30 µm, whereas when polishing is necessary, the thickness of the covering layer 3a before polishing should be between 0.01 and 50 µm. Moreover, it is preferable that the covering layer 3a be twice as thick as the amount of the covering layer removed during the polishing process.

Furthermore, it is possible to form a covering layer 3a on the surface of the resin base plate 2 by a plating method, such as electroplating or chemical plating. Other methods, such as the sputtering, vacuum deposition, or the CVD method, can also be used. Other applying methods, such as a bar coating method, dip coating (immersion and extraction) method, spin coat method, spraying method, or printing method, can also be used.

As stated above, the use of resin as a base material enables a resin base plate 2 to be made by injection molding or cast molding. Dimensional accuracy and surface accuracy of the base plate depend on the surface accuracy and molding conditions of a die used for injection molding or other molding techniques. Therefore, by using a precisely machined die and accurately controlling the molding process, it is possible to accurately mass-produce base plates of excellent dimension and uniform smooth surface quality. For example, it is possible to reduce surface roughness Ra of the resin base plate to 10 nm or less. This can eliminate the polishing process. Furthermore, even if grinding and polishing processes are necessary after a molded base plate has been taken out to achieve desired surface accuracy (surface roughness or undulation) or dimensional accuracy, polishing, grinding and cleaning processes can be largely simplified when compared to those polishing, grinding and cleaning processes in the production procedure of substrate that uses glass or aluminum for a base material. As a consequence, it is possible to reduce production costs.

Because the base plate is made of resin, it is not easily broken and is relatively light when compared to glass or aluminum substrates made in accordance with the conventional technology, which makes it possible to make a magnetic information recording medium and a magnetic disk recording apparatus light.

Furthermore, because a resin base plate 2 can be made by injection molding or cast molding, it is relatively easy to create base plates that have complicated shapes by designing and making dies for them. A pattern can also be directly formed on the resin base plate.

Even if surface accuracy of the covering layer 3a is not of a desired value, grinding and polishing the covering layer 3a as necessary makes it possible to eventually obtain a desired substrate for a magnetic information recording medium; for example, the surface roughness Ra can be 1 nm or less. After the polishing process, a magnetic layer is formed on the covering layer 3a by the sputtering process, thereby creating a magnetic information recording medium. Moreover, the amount of the covering layer 3a to be polished depends on the surface roughness Ra of the resin base plate 2 before the covering layer 3a has been formed; and as the surface roughness Ra becomes greater, more of the covering layer 3a has to be polished.

This is because surface roughness of the substrate for a magnetic information recording medium, that is, surface roughness Ra of the covering layer 3a has a correlation with surface roughness Ra of the resin base plate 2. Therefore, when surface roughness Ra of the resin base plate 2 becomes great, surface roughness of the substrate for a magnetic information recording medium also becomes great.

Accordingly, it is preferable that the surface roughness Ra of the resin base plate 2 be 20 nm or less. By setting surface roughness Ra of the resin base plate 2 at 20 nm or less and forming a covering layer 3a on that surface, it is possible to reduce the polishing time when compared to the time for grinding and polishing an aluminum or glass substrate in a conventional method.

Furthermore, by setting surface roughness Ra of the resin base plate 2 at 10 nm or less and forming a covering layer 3a on that surface, it is possible to reduce the polishing time by 50% when compared to a situation in which a covering layer 3a is formed on the surface of the resin base plate 2 which has surface roughness Ra of 20 nm. Therefore, it is preferable that surface roughness Ra of the resin base plate 2 be 10 nm or less.

Furthermore, it is preferable that undulation Wa of a substrate for a magnetic information recording medium be 50 Å or less. By setting undulation Wa at 50 Å or less, it is possible to obtain a magnetic information recording medium that enables reliable recording and reproduction operations. Moreover, it is preferable that undulation Wa be 30 Å or less.

The followings are used for a concrete measuring method of a undulation: a method specified by a contact instrument for the measurement of surface roughness according to "Geometrical Product Specification (GPS) - Surface texture:
Profile method - Nominal characteristics of contact (stylus) instruments" in JIS B0651 or a method specified by "Instruments for the measurement of surface roughness by the interferometric method" in JIS B0652.

Moreover, when the concentricity of the outer shape of the substrate for a magnetic information recording medium and the circular hole at the central portion of the substrate is referred to as P and the diameter of the substrate for a magnetic information recording medium is referred to as L, it is preferable that the P/L equation be as follows: P/L < 3.2 x 10⁻⁴. By doing so, it is possible to obtain a magnetic information recording medium that can stably rotate at a high speed.

Furthermore, it is preferable that the allowable temperature limit or glass transition temperature Tg of the resin base plate 2 used as a base material be as high as possible. Because a magnetic layer is formed on the polished covering layer 3a by the sputtering operation, the allowable temperature limit or glass transition temperature Tg should be higher than the sputtering temperature. For example, it is preferable that resin be used whose allowable temperature limit or glass transition temperature Tg is 200 °C or higher.

Resin whose glass transition temperature Tg is 200 °C or higher includes the following: polyether sulfone resin (PES resin), polyetherimide resin (PEI resin), polyamide-imide resin, polyimide resin, polybenzoimidazole resin, BMC resin, or liquid crystalline polymer. More specifically, UDEL (Solvay Advanced Polymers) is recommended as polyether sulfone resin (PES resin); ULTEM (GE Plastics Japan Ltd.) is recommended as polyetherimide resin (PEI resin); TORLON (Solvay Advanced Polymers) is recommended as polyamide-imide resin; AURUM (Mitsui Chemicals) is recommended as polyimide resin (thermoplastic); UPILEX (Ube Industries) is recommended as polyimide (thermosetting) resin, and PBI/Celazole (Clariant in Japan) is recommended as polybenzoimidazole resin. Furthermore, Sumikasuper LCP (Sumitomo Chemical) is recommended as liquid crystalline polymer, and Victrex (Victrex-MC) is recommended as polyether ether ketone.

Furthermore, it is preferable that resin which has very low hygroscopic property is used for a resin base plate 2 so as to prevent displacement with the magnetic head due to change in dimension of the substrate caused by moisture. Typical resins with a very low hygroscopic property include polycarbonate and cyclic polyolefin resin.

Moreover, it is preferable that resin be used which is highly adhesive to a covering layer 3a formed on a base plate surface. For example, resin material used for a resin base plate 2 includes resin that has a polar radical on its surface, resin that has large surface roughness Ra, and resin that includes particles.

For example, when surface roughness Ra of the resin base plate 2 becomes large, a planar dimension of the area at which the surface of the base plate comes in contact with the covering layer 3a formed thereon increases, thereby making it possible to increase the adhesiveness between the resin base plate 2 and the covering layer 3a. By adjusting the surface roughness Ra of a die used for making a resin base plate 2 by injection molding or cast molding, it is possible to increase surface roughness Ra of the resin base plate 2 that is to be obtained by molding. Moreover, after increasing the surface roughness Ra of the resin base plate 2, it is possible to obtain required surface roughness Ra by polishing the covering layer 3a formed on the surface of the base plate. However, the covering layer 3a must be thick enough to eliminate roughness of the surface of the base plate and compensate for friction caused by the polishing operation after the covering layer 3a has been formed in order to achieve surface roughness Ra ≤ 1 nm. Therefore, if surface roughness Ra of the base plate is made too large, the efficiency of the machining process decreases. For example, surface roughness Ra ≤ 1000 nm or surface roughness Ra ≤ 100 nm is preferable.

In the case of mixing particles into resin, particles with a material same to the surrounding material may be used, however, a material being different from the resin used for a base material and having higher degree of hardness than the resin used for a base material or a smaller linear expansion coefficient than the resin used for a base material may preferably used. Furthermore, there are also may be used to use particles which have durability properties, such as chemical resistance to the etching with solvent or chemicals, heat resistance, or vulnerability to ultraviolet rays, are different from those of the base mateiral.

The shape of the particle can be spherical, irregular, elliptic, or fibrous. Particles may be applied in one direction or in random directions. The size of a particle should be between 0.1 and 10 µm.

Usable particles are metal, semiconductor, oxide, carbide, nitride, phosphide, sulfide, carbonate, phosphate, sulfate, nitrate, fluoride, chloride, bromide, glass, glass fiber, carbon fiber, carbon power, carbon nanotube, or fullerene. For example, Si (silicon), Al (aluminum), C (carbon), Sn (tin), Zn (zinc), Ti (titanium), In (indium), Mg (magnesium), Pd (palladium), Ba (barium), La (lanthanum), Ta (tantalum), Mo (molybdenum), W (tungsten), V (vanadium), or Sr (strontium) can be used as materials that make up such particles. Furthermore, a chemical compound that mainly includes the above components, such as oxide, sulfide, carbon oxide, phosphorus oxide, or fluoride, can be used. Specifically, SiO₂, Al₂O₃, TiO₂, SrCO₃, C, AlPO₄, CaCO₃, ITO, ZnS, or MgF₂ are used for such particles.

The above examples are used for inorganic particles. And, resin particles that are different from the resin used for the base material may be used. For example, ABS resin already contains butadiene particles, and by selectively etching butadiene particles, it is possible to change the shape of the substrate surface.

Thus, mixing particles into the resin base material can increase damage resistance and rigidity as well as increase the adhesiveness between the resin base plate 2 and the covering layer 3a because portions of particles on the surface of the resin base plate 2 protrude and the surface becomes rough. Moreover, the degree of the surface roughness can be controlled by selecting a particular kind of particle (ex. type of particle, size of particle, amount of particle added), etching, heating, radiating energy particle, or a combination of those processes.

When both diameter of the above particles and the amount of particles added become large, it is more effective to increase the hardness, strength, and thermal expansion of the resin base plate 2, thereby making it easy to make the surface rough as well as increasing the adhesiveness between the base plate surface and the covering layer 3a. However, if the particle diameter is too large and the amount of particles added is also too large, a problem will arise with regard to molding; too rough surface of the base plate makes processing difficult. Therefore, it is necessary to set an appropriate amount of particles added according to the specific purpose. For example, when making a thin covering layer 3a and minimizing the amount of layer processed, it is recommended that the particle to be added should have diameter of 1 µm or less, and the amount of particles added should be 10% or less as far as the required adhesiveness is secured. Furthermore, when increasing an adhesiveness and improving resin characteristics, it is recommended that the particle to be added should have diameter of about 10 µm, and the amount of particles added should be several tens % as far as there is no problem with molding.

Furthermore, a multilayer film in which two or more layers are laminated may be used as a covering layer 3a, and an inclined component layer in which the component is gradually changed in the direction of the thickness may also be used. For example, a layer that is highly adhesive to resin is formed on the surface that comes in direct contact with the resin base plate 2, and a layer that is hard enough to be polished is formed on the top-most surface. By doing so, it is possible to increase adhesiveness between the resin base plate 2 and the covering layer 3a and also to facilitate the polishing of the covering layer 3a. For example, by making the layer formed on the top-most surface harder than the layer formed on the surface facing the resin base plate 2, it is possible to easily obtain desired surface accuracy by polishing the covering layer 3a.

In a perpendicular magnetic information recording medium which is a highly anticipated high-density technology, magnetic bodies have to be aligned perpendicular to the substrate surface; and to do so, a soft magnetic layer must be formed between the magnetic layer and the substrate. Nickel-cobalt (Ni-Co) alloy is a representative alloy for the soft magnetic layer. By using Ni-Co alloy as a covering layer 3a, it is also able to function as a soft magnetic layer in the perpendicular magnetic information recording medium.

Furthermore, as shown in a substrate for a magnetic information recording medium 4 in the cross-sectional view in FIG. 1(c), covering layers 3a and 3b may be formed on both sides of the resin base plate 2. It is also possible to simultaneously cover the side end surface of the base plate. In this case, a cobalt-base alloy magnetic layer is formed on the covering layer 3a that has been formed on one side of the substrate, thereby making a magnetic information recording medium.

When rough shapes are created on the surface of the resin base plate 2 to increase adhesiveness of the covering layer 3a(3b), if surface roughness Ra of the covering layer 3a(3b) is not of a desired value (for example, surface roughness Ra ≤ 1 nm), the surface of the covering layer 3a(3b) is ground and polished until the desired surface roughness is obtained to form a magnetic information recording medium substrate and then a magnetic layer is formed on the covering layer 3a(3b), thereby making a magnetic information recording medium.

Thus, by forming covering layers 3a and 3b on both sides of the resin base plate 2, it is possible to reduce warpage of the magnetic information recording medium substrate. That is, if a covering layer 3a is formed on only one side of the resin base plate 2, tensile stress or compression stress resulting from the covering layer 3a may cause the magnetic information recording medium substrate to warp. On the contrary, by forming covering layers 3a and 3b on both sides of the resin base plate 2, tensile stress or compression stress occurs on both sides, which results in reduced warpage of the magnetic information recording medium substrate because those stresses counteract each other. Furthermore, effects of covering the resin base plate improve chemical stability such as hygroscopic characteristics and gas discharge characteristics.

The thickness of the covering layer 3a may be the same as or different from that of the covering layer 3b. Even if the thickness of those two layers is different, by forming the covering layers 3a and 3b on both sides, it is possible to reduce warpage of the magnetic information recording medium substrate when compared to substrates on which a covering layer 3b is not formed.

It is also possible to conduct an annealing process if necessary to increase performance and stable quality at the point in time after the resin base plate 2 has been created, and before or after the forming of the covering layer 3a and the polishing of the covering layer 3a.

### [Second embodiment]

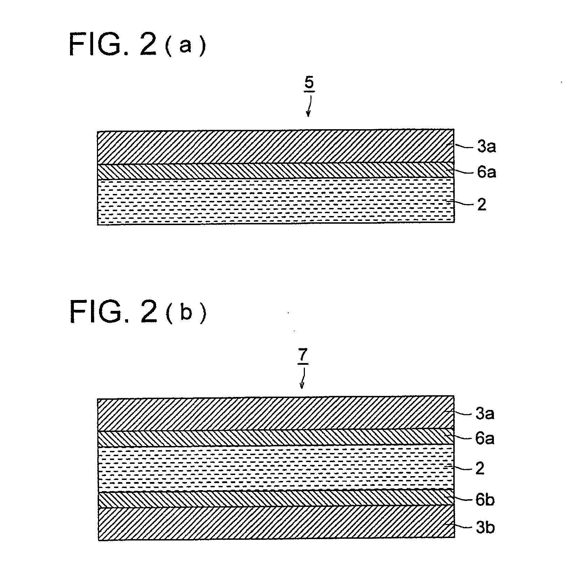

Next, a substrate for a magnetic information recording medium according to a second embodiment of the present invention will be described with reference to FIGs. 2(a) and 2(b). FIGs. 2(a) and 2(b) are a cross-sectional views that show the configuration of a substrate for a magnetic information recording medium of a second embodiment according to the present invention.

As shown in FIG. 2(a), a substrate for a magnetic information recording medium 5 according to a second embodiment comprises a resin base plate 2; an intermediate layer 6a is formed on one side of the resin base plate 2 and a covering layer 3a is formed on the intermediate layer 6a. In the first embodiment above, a covering layer 3a is directly formed on the resin base plate 2; however, in the second embodiment, an intermediate layer 6a is formed between the resin base plate 2 and the covering layer 3a.

Thermosetting resin, active ray-curable resin, and other different kinds of resins can be used for an intermediate layer 6a. For example, epoxy resin or silicone resin is used as thermosetting resin.

As active ray-curable resin, ultraviolet-curable resin is used such as ultraviolet-curable acrylic urethane resin, ultraviolet-curable polyester acrylate resin, ultraviolet-curable epoxy acrylate resin, ultraviolet-curable polyol acrylate resin, or ultraviolet-curable epoxy resin. To effectively achieve the purpose of the present invention, it is preferable that a photoinitiator be used to accelerate the curing reaction before radiating an active ray to cure the coated layer. At this point in time, a photosensitizing agent can simultaneously be used. Furthermore, when oxygen in the air suppresses the above curing reaction, it is possible to radiate an active ray within an atmosphere of inactive gas in order to decrease oxygen concentration or eliminate oxygen. Although an infrared ray, visible light, or ultraviolet ray can be used as an active ray, it is preferable to use an ultraviolet ray. However, it does not mean that an active ray is limited to the ultraviolet ray. Furthermore, it is possible to enhance the curing reaction by applying heat before, during, or after the irradiation of an active ray.

An intermediate layer 6a is formed by being applied on the resin base plate 2. For example, the intermediate layer 6a is formed on the resin base plate 2 by a bar coating method, dip coating (immersion and extraction) method, spin coat method, spraying method, or printing method.

The intermediate layer 6a serves functions: smoothness to smooth the surface of the resin base plate 2, adhesiveness to increase adhesiveness between the resin base plate 2 and the covering layer 3a, and strength to increase strength of a magnetic information recording medium substrate 5 which is a final product.

First of all, an explanation will be given about the smoothness. By forming an intermediate layer 6a on the resin base plate 2, rough shapes on the surface formed when the resin base plate 2 has been made is eliminated thereby making it possible to reduce surface roughness of the base plate. Even if roughness or undulation of the surface of the resin base plate 2 is great, the intermediate layer 6a reduces the effects of surface roughness or undulation thereby reducing surface roughness and undulation of the base plate. Moreover, when dimensional accuracy or surface accuracy has not reached the desired level after the intermediate layer 6a is formed, it is possible to conduct additional processes, such as cutting, polishing, and grinding.

Next, an explanation will be given about the adhesiveness. There is a possibility that adhesiveness between a resin base plate 2 and a covering layer 3a may be weak depending on a material combination of the resin base plate 2 with the covering layer 3a. In this case, forming an intermediate layer 6a will enable the adhesiveness between the resin base plate 2 and the covering layer 3a to become stronger. For example, by making the surface of the intermediate layer 6a rough thereby providing asperity according to film-forming conditions, a planar dimension of the area at which the surface of the intermediate layer 6a comes in contact with the covering layer 3a increases. As a result, adhesiveness between the intermediate layer 6a and the covering layer 3a increases, thereby making it possible to firmly form a covering layer 3a on the resin base plate 2.

Furthermore, in order to increase adhesiveness between an intermediate layer 6a and a covering layer 3a, it is possible to mix particles into resin and use the resin to form an intermediate layer 6a. The same particles can be used as those that are included in the resin base plate 2 in the first embodiment. An intermediate layer 6a is provided with a resin in which particles formed of a material same to the resin is mixed, however, in this embodiment, an intermediate layer 6a is provided with a resin in which particles formed of a material different form the resin is mixed. For example, particles of a material that is harder than resin, particles that have smaller linear expansion coefficient than resin, or particles that have different durability than resin can be used.

Thus, by mixing particles into resin to form an intermediate layer 6a, portions of particles protrude on the surface of the intermediate layer 6a or portions of particles or all of the particles are eliminated by etching thereby making the surface of the intermediate layer 6a rough. Thus, by providing asperity on the surface of the intermediate layer 6a, it is possible to increase adhesiveness between the intermediate layer 6a and the covering layer 3a.

If a crack occurs when a temperature increases because the difference of the linear expansion coefficient between the resin base plate 2 and the covering layer 3a is large, it is possible to prevent or reduce the occurrence of cracks by setting the linear expansion coefficient of the intermediate layer 6a at a value which is intermediately between the linear expansion coefficient of the resin base plate 2 and that of the covering layer 3a.

Next, an explanation will be given about the strength. Since a resin base plate 2 which uses resin for a base material is soft, there is a possibility that the base plate may warp and deform depending on the thickness of the base plate. If the resin base plate 2 thus warps, a problem will arise with the tracking performance of the magnetic head when a magnetic information recording medium rotates. Therefore, it is possible to reinforce strength of the resin base plate 2 by providing an intermediate layer 6a between the resin base plate 2 and the covering layer 3a. Furthermore, in order to further increase strength, resin that contains particles may be used as an intermediate layer 6a.

Moreover, the resin base plate 2 is created by using the same material (resin) as used in the first embodiment as the base material and also by using the same method. Accordingly, it is possible to mix particles into the resin base plate 2. Furthermore, the covering layer 3a uses the same material as used in the first embodiment and is made by the same method. Therefore, the covering layer 3a may be a multi-layer film.

When a magnetic information recording medium is made by using a substrate for a magnetic information recording medium 5, in the same manner as in the first embodiment, a magnetic layer is formed on the covering layer 3a thereby creating a magnetic information recording medium. Moreover, the covering layer 3a may be ground and polished so as to accurately obtain desired surface conditions.

Furthermore, as shown in a substrate for a magnetic information recording medium 7 in the cross-sectional view of FIG. 2(b), it is possible to form intermediate layers 6a and 6b on both sides of the resin base plate 2 and also form covering layers 3a and 3b on those intermediate layers 6a and 6b. Thus, by forming intermediate layers 6a and 6b and covering layers 3a and 3b on both sides of the resin base plate 2, tensile stress or compression stress that occurs on both sides is cancelled out thereby making it possible to reduce the warpage of the base plate for a magnetic information recording medium. Furthermore, the thickness of the intermediate layers 6a and 6b and the covering layers 3a and 3b may be the same or different.

A magnetic film is formed on the covering layer 3a which has been formed on one side of the base plate thereby making a magnetic information recording medium. In the same manner as in the first embodiment, if surface roughness Ra of the covering layer 3a is not of a desired value (for example, Ra ≤ 1 nm), the surface of the covering layer 3a is ground and polished so as to have a desired surface roughness Ra thereby creating a magnetic information recording medium substrate; then, a magnetic layer is formed on the covering layer 3a thereby creating a magnetic information recording medium.

It is also possible to conduct an annealing process if necessary to increase performance and stable quality at the point in time after the resin base plate 2 has been created, and before or after the forming of the intermediate layer 6a, the forming of the covering layer 3a, and the polishing of the covering layer 3a.

### [Third embodiment]

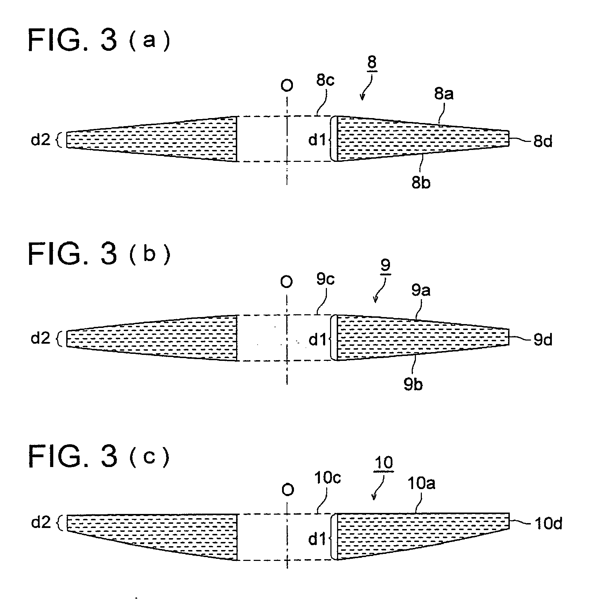

Next, a substrate for a magnetic information recording medium of a third embodiment according to the present invention will be described with reference to FIGs. 3(a) to 3(c). FIGs. 3(a) to 3(c) show cross-sectional views that show a base plate used as a base material for a substrate for a magnetic information recording medium of a third embodiment according to the present invention.

In the above first and second embodiments, the surface of the resin base plate 2 is made flat and horizontal, and the thickness of the resin base plate 2 is uniform from its central portion to its circumferential portion; however in the third embodiment, the thickness of the central portion of the resin base plate is different from the thickness of the circumferential portion.

As shown in a cross-sectional view of FIG. 3(a), a resin base plate 8 according to a third embodiment has an aperture 8c which penetrates vertically at the central portion O of the base plate, and thickness of the base plate gradually decreases from the central portion O towards the circumferential portion 8d of the resin base plate 8. That is, the circumferential portion is thinner than the central portion O. In this example, surfaces 8a and 8b of the resin base plate 8 are made flat and inclined thereby making the substrate gradually thinner towards the circumferential portion 8d. Herein, if the thickness of the central portion O is "thickness d1" and if the thickness of the circumferential portion 8d is "thickness d2," the established relation is thickness d1 > thickness d2.

This resin base plate 8 can also be made in the same manner as the first and second embodiments (injection molding, etc.). Moreover, the angle of inclination of the surfaces 8a and 8b can be flexibly determined by changing the shape of the die used for making the resin base plate 8. For example, given a base plate with an outside diameter of 1 inch, if the thickness d1 of the central portion O is 1 mm, the thickness of the circumferential portion 8d may be reduced down to 0.3 mm.

As stated above, by making the circumferential portion of the resin base plate 8 thinner than the central portion, it is possible to reduce wobbling caused by rotation when a magnetic information recording medium that uses a resin base plate 8 is rotated in the magnetic disk recording apparatus. Consequently, it is possible to increase the tracking performance of the magnetic head.

When a resin base plate is made by injection molding, generally, resin is filled from a gate provided at the central portion to form a substrate, and then an aperture is formed by removing an area located at the central portion, thereby creating a molded base plate. When applying this method, by using a die which enables the central portion of the resin base plate to become thicker than the circumferential portion, it is possible to increase the fluidity of resin thereby facilitating the molding operation.

An inclination angle of the surface 8a may be identical to or different from the inclination angle of the surface 8b. Regardless of the inclination angles of two surfaces 8a and 8b, as long as the substrate is thick at the central portion O and gradually becomes thinner towards the circumferential portion 8d, the above operation and effects can be obtained.

Furthermore, a resin base plate 9 as shown in FIG. 3(b) may be used as a resin base plate. A resin base plate 9 also has an aperture 9c which penetrates vertically at the central portion O of the base plate, and the thickness of the base plate gradually decreases from the central portion O towards the circumferential portion 9d of the resin base plate 9. In this example, surfaces 9a and 9b of the resin base plate 9 are convex curved surfaces, and by making the two surfaces 9a and 9 convex and curved, it is possible to make the substrate gradually thinner towards the circumferential portion 9d.

As stated above, by making the surfaces 9a and 9b of the base plate convex and curved and making the circumferential portion thinner than the central portion, it is possible to reduce wobbling caused by rotation, thereby increasing the tracking performance of the magnetic head.

Moreover, the curvature radius of surface 9a may be identical to or different from the curvature radius of surface 9b. Regardless of the curvature radius of the two surfaces 9a and 9b, as long as the base plate is thick at the central portion O and gradually becomes thinner towards the circumferential portion 9d, the above operation and effects can be obtained.

Furthermore, a resin base plate 10 as shown in FIG. 3(c) may be used as a resin base plate. A resin base plate 10 also has an aperture 10c which penetrates vertically at the central portion O of the base plate, and the thickness of the base plate gradually decreases from the central portion O towards the circumferential portion 10d of the resin base plate 10. In this example, surfaces 10a and 10b of the resin base plate 10 are flat, but, the surface 10a is horizontal and the opposite surface 10b is inclined. This is the difference between the resin base plate 10 and the resin base plate 8a shown in FIG. 3(a). Both sides of the resin base plate 8a are inclined; however, one side (surface 10a) of the resin base plate 10, shown in FIG. 3(c), is uniformly horizontal and only the other side (surface 10b) is inclined. Thus, one surface is made into an inclined plane (surface 10b), the thickness of the base plate gradually becomes thinner from the central portion O towards the circumferential portion 10d.

When a covering layer 3a and an intermediate layer 6a are formed on the resin base plate 10, they are formed on the horizontal surface 10a. Moreover, it is also possible to form a covering layer 3b and an intermediate layer 6b on the inclined surface 10b.

As stated above, by making only one side (surface 10b) an inclined plane and thereby making the circumferential portion thin, it is possible to reduce wobbling during rotation, thereby making it possible to increase the tracking performance of the magnetic head.

Moreover, resin base plate 8, 9 and 10 according to the third embodiment are different in shape from the resin base plate according to the first and second embodiments; however, material, surface roughness Ra, and arbitrarily included particles are the same as those in the first and second embodiments.

A covering layer 6a is formed on the surfaces of the resin base plate 8, 9 and 10, shown in FIGs. 3(a), 3(b) and 3(c) respectively, in the same manner as the first embodiment, thereby making a substrate for a magnetic information recording medium. If surface roughness Ra of the covering layer 3a is not a desired value (for example, Ra ≤ 1 nm), the surface of the covering layer 3a is ground and polished to have desired surface roughness Ra thereby creating a magnetic information recording medium substrate; then, a magnetic layer is formed on the covering layer 3a thereby creating a magnetic information recording medium.

Furthermore, it is possible to form an intermediate layer 3a between the resin base plate 8, 9 and 10 and the covering layer 6a in the same manner as the second embodiment. Covering layers 6a and 6b and intermediate layers 6a and 6b may also be formed on both sides of the resin base plate 8, 9 and 10.

In the above first, second, and third embodiments, when particles are mixed into the resin base plate 2 or an intermediate layer 6a(6b), by doing so, rough shapes are created on the surface of the resin base plate 2 or the intermediate layer 6a(6b), or portions of the particle protrudes, thereby making it possible to improve adhesiveness to the adjacent layers.

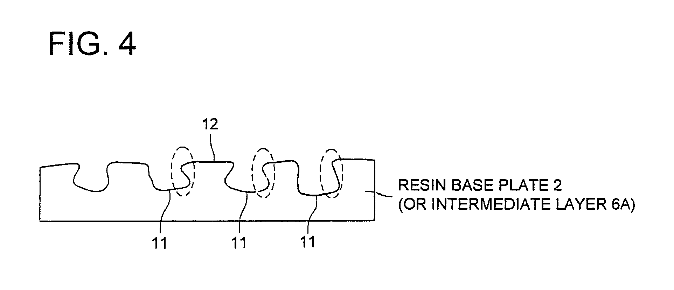

Furthermore, in order to improve adhesiveness, particles formed of a material different from the surrounding material are included in the resin base plate or intermediate layer 6a (6b), and the surface of the resin base plate 2 or the intermediate layer 6a(6b) is dissolved by a solvent thereby making particles contained in the resin base plate 2 or the intermediate layer 6a(6b) exposed and thus purposely making the surface rough. Furthermore, by etching the resin base plate 2 or the intermediate layer 6a(6b) to remove portions of or the entire particles included in the surface area, it is possible to purposely make the surface rough. At this time, if the rough shapes include deep concave shapes that were made by scooping out resin from the surface, adhesiveness may be further increased. For example, as shown in a cross-sectional view of FIG. 4, a concave portion 11 is formed on the surface of a resin base plate 2 or an intermediate layer 6a in such a way that resin has been scooped out from the opening of the concave portion 11 (indicated by the broken line in FIG. 4). Thus, when the rough surface includes the shape in which the side of the convex portion 12 has been inwardly scooped out to form the concave portion 11, the adhesiveness can be further increased.

In the above first, second, and third embodiments, it is possible to increase performance and quality so as to ensure sufficient performance from a magnetic information recording medium by applying chamfering or deburring of the substrate or by processing the substrate shape to facilitate substrate processing in the subsequent process.

### EXAMPLES

Next, specific examples of the present invention will be described.

### (Example 1)

The example 1 corresponds to the above first embodiment. Herein, an explanation will be given about an example in which a covering layer 3a is formed on the surface of one side of a resin base plate 2 to create a substrate for a magnetic information recording medium.

### (Molding a resin base plate 2)

A substrate for a magnetic information recording medium according to example 1 employs polyimide as a base material (resin base plate), and a resin base plate 2 is formed in a disc shape by the injection molding technique. As polyimide, AURUM (Mitsui Chemicals) was used. The dimensions of the resin base plate 2 are as follows:
Outside diameter: 1 inch (25.4 mm)
Thickness of resin base plate 2: 0.4 mm
Surface roughness Ra: 20 nm

Thus, by injection molding resin, it is possible to create a resin base plate having low surface roughness Ra which eliminates the need for a polishing operation. Consequently, the polishing process necessary for making an aluminum substrate and a glass substrate can be eliminated, thereby making it possible to reduce costs for substrate production of magnetic recording media.

### (Forming a covering layer 3a)

A 1-µm Ni layer was formed on the surface of the resin base plate 2 by nonelectrolytic plating the above resin base plate 2. Then, an NiP alloy plated layer (hereafter, referred to as NiP layer) was formed on the Ni layer by further conducting the nonelectrolytic plating. The NiP layer is 30 µm thick. The Ni layer and the NiP layer constitute a covering layer 3a.

### (Polishing process)

After the above covering layer 3a had been formed, the surface of the covering layer 3a was polished. Slurry that is mainly composed of colloidal silica was used as a polishing agent in this polishing process. Surface roughness Ra of the polished substrate for a magnetic information recording medium was 0.4 nm.

As stated above, according to example 1, it is possible to make surface roughness Ra of the polished substrate for a magnetic information recording medium 1 nm or less. Therefore, without polishing the resin base plate 2 itself, it is possible to reduce surface roughness Ra of the substrate for a magnetic information recording medium to the value that is required for a magnetic information recording medium.

After the above polishing process, a cobalt-base alloy magnetic layer was formed on the covering layer 3a by the sputtering operation, thereby creating a magnetic information recording medium.

Moreover, polyimide was used for a base material of the resin base plate 2 in this example 1; however, other different kinds of resin mentioned in the above first embodiment can be used to obtain the same effects as example 1. Furthermore, the covering layer 3a was an NiP layer, however, a layer that includes other components mentioned in the first embodiment can be used to obtain the same effects as example 1.

### (Example 2)

The example 2 corresponds to the above second embodiment. Herein, an explanation will be given about an example in which an intermediate layer 6a is formed on the surface of one side of a resin base plate 2, and a covering layer 3a is then formed on the intermediate layer 6a thereby creating a substrate for a magnetic information recording medium.

### (Molding a resin base plate 2)

A substrate for a magnetic information recording medium according to example 2 employs cyclic polyolefin resin as a base material (resin base plate), and a resin base plate 2 is formed in a disc shape by the injection molding technique. As cyclic polyolefin, APEL (Mitsui Chemicals) was used. The dimensions of the resin base plate 2 are as follows:
Outside diameter: 1 inch (25.4 mm)
Thickness of resin base plate 2: 0.4 mm
Surface roughness Ra: 10 nm

Thus, by injection molding resin, it is possible to create a resin base plate having low surface roughness Ra without needing a polishing operation.

### (Forming an intermediate layer 6a)

An intermediate layer 6a was formed by being applied on the above resin base plate 2. In this example 2, an applying resin paint was first made by mixing 20 wt% silica particles that have a diameter of between 1 and 3 µm into ultraviolet-curable acrylic resin that comprises the components described below. Next, the applying resin paint was applied onto the surface of the above resin base plate 2 by a spin coat method, dried at 40 °C for 30 seconds thereby evaporating the solvent. The coated layer was then cured by radiation of an ultraviolet ray thereby forming an intermediate layer 6a.
The intermediate layer 6a was 7 µm thick.
<Ultraviolet-curable acrylic resin>
Dipentaerythritol hexaacrylate monomer: 70 g
Dipentaerythritol hexaacrylate dimer: 15 g
Dipentaerythritol hexaacrylate trimer or greater component: 15 g
Diethoxybenzophenone photoreaction initiator: 4 g
Propylene glycol monomethyl ether: 75 g
Methyl ethyl ketone: 75 g

### (Forming a covering layer 3a)

After an intermediate layer 6a had been formed on a resin base plate 2, a covering layer 3a was formed on the intermediate layer 6a. As pretreatment to form a covering layer 3a, the resin base plate 2 on which an intermediate layer 6a has been formed was etched. Herein, etching was conducted until portions of the particles contained in the intermediate layer 6a protrude from the surface. The intermediate layer 6a was removed by etching, and portions of the particles contained in the intermediate layer 6a protrude from the surface. Protruding particles cause rough shapes to be formed on the surface of the intermediate layer 6a.

After the etching, a 1-µm Ni layer was formed on the intermediate layer 6a by means of nonelectrolytic plating, and then an NiP layer was formed on the Ni layer by further conducting the nonelectrolytic plating. The NiP layer was 35 µm thick. After that, a 5-µm thick Cr layer was formed on the NiP layer by the electrolytic plating. The Ni layer, NiP layer, and Cr layer constitute a covering layer 3a.

Furthermore, by etching an intermediate layer 6a, portions of the particles contained in the intermediate layer 6a protrude from the surface; and the protruding particles cause level differences to be formed on the surface of the intermediate layer 6a thereby making the surface rough. Thus, surface of the intermediate layer 6a becomes rough, and therefore the plated Ni layer and NiP layer firmly adhere to the surface of the intermediate layer 6a. That is, by making the surface of the intermediate layer 6a rough as the result of the presence of the particles, it is possible to increase adhesiveness between the intermediate layer 6a and the covering layer 3a such as an NiP layer.

Moreover, forming a Cr layer on an NiP layer makes it possible to prevent the NiP layer from becoming cloudy.

### (Polishing process)

After the intermediate layer 6a had been formed and then the covering layer 3a had been formed, the surface of the covering layer 3a was polished. Slurry that is mainly composed of colloidal silica was used as a polishing agent in this polishing process. The surface roughness Ra of the polished substrate 1 for a magnetic information recording medium was 0.4 nm.

As stated above, according to example 2, it is possible to make surface roughness Ra of the polished substrate for a magnetic information recording medium 1 nm or less. Therefore, without polishing the resin base plate 2 itself, it is possible to reduce surface roughness Ra of the substrate for a magnetic information recording medium to the value that is required for a magnetic information recording medium.

Furthermore, after the above polishing process, a cobalt-base alloy magnetic layer is formed on the covering layer 3a by the sputtering operation, thereby creating a magnetic information recording medium.

Moreover, cyclic polyolefin resin was used for a base material of the resin base plate 2 in this example 2, however, other different kinds of resin mentioned in the above first embodiment can be used to obtain the same effects as example 2. Furthermore, ultraviolet-curable acrylic resin was used for an intermediate layer 6a; however, other different kinds of resin mentioned in the above second embodiment can be used to obtain the same effects as example 2. Furthermore, the covering layer 3a comprised an NiP layer and a Cr layer, however, a layer that includes other components mentioned in the first embodiment can be used to obtain the same effects as example 2.

### (Example 3)

The example 3 corresponds to the above third embodiment. Herein, a specific example of the resin base plate 9 shown in FIG. 3(b) will be explained.

### (Dimensions of the resin base plate 9)

The dimensions of the resin base plate 9 according to example 3 are as follows:
Outside diameter: 1 inch (25.4mm)
Inner diameter (bore diameter): 7 mm
Thickness of central portion O: 1 mm
Thickness of circumferential portion (circumferential portion 9d): 0.3 mm
Curvature radius R of curved surface 9a and 9b: 300 mm

A covering layer 3a was formed on the resin base plate 9 which has been created as stated above, and its surface was polished thereby creating a final substrate for a magnetic information recording medium. The thickness of the covering layer 3a before and after the polishing process is the same as that of the above example 1. Furthermore, an intermediate layer 6a was formed on the resin base plate 9, and a covering layer 3a was formed on the intermediate layer 6a; subsequently, the surface of the covering layer 3a was polished thereby creating a final substrate for a magnetic information recording medium. The thickness of the intermediate layer 6a is the same as that of the above example 2.

After the covering layer 3a has been polished, a cobalt-base alloy magnetic layer was formed on the covering layer 3a by the sputtering operation, thereby creating a magnetic information recording medium.

According to example 3, it is possible to reduce wobbling caused by the rotation of a magnetic information recording medium, thereby increasing the tracking performance of the magnetic head. Furthermore, because the central portion of the base plate is made thicker than the circumferential portion, it was verified that fluidity of resin is increased and the molding process is made easy when a resin base plate 9 is made by injection molding.

Moreover, although the curvature radius R of surfaces 9a and 9b depends on the dimensions of the base plate, for example, when the size of the base plate is 1 inch, it is preferable that the curvature radius R be 135 mm or more.

## Claims

1. A substrate for a magnetic information recording medium comprising:
a base plate in a disk shape comprising a resin material; and
a covering layer formed on at least one surface of the base plate.

2. The substrate of claim 1,
wherein the covering layer is formed on each of opposite surfaces of the base plate.

3. The substrate of claim 1 or 2, further comprising:
an intermediate layer formed between the base plate and the covering layer(s).

4. The substrate of claim 3,
wherein the intermediate layer comprises a resin material formed by being applied on the base plate.

5. The substrate of claim 3 or 4,
wherein the intermediate layer comprises a plurality of particles.

6. The substrate of any one of the preceding claims,
wherein the base plate comprises a plurality of particles.

7. The substrate of claim 5 or 6,
wherein the plurality of particles comprise at least one of metal, semiconductor, oxide, carbide, nitride, phosphide, sulfide, carbonate, phosphate, sulfate, nitrate, fluoride, chloride, bromide, glass, glass fiber, carbon fiber, carbon power, carbon nanotube, and fullerene.

8. The substrate of claim 6,
wherein the plurality of particles are resin particles comprising a material different from a material surrounding the plurality of particles.

9. The substrate of any one of the preceding claims,
wherein the base plate comprises a surface with a surface roughness of 10 nm or less.

10. The substrate of any one of the preceding claims,
wherein a resin material forming the base plate has a glass transition temperature Tg of 200 °C or more.

11. The substrate of any one of the preceding claims,
wherein the base plate is formed by one of an injection molding, a cast molding, a sheet forming, an injection compression molding, and a compression molding.

12. The substrate of claim 11,
wherein the base plate comprises an opening formed at a center of the base plate.

13. The substrate of claim 12,
wherein at last one of an inner diameter dimension, an outside diameter dimension, an internal circumference shape, and an outer circumference shape of the base plate is formed when the base plate is formed.

14. The substrate of any one of the preceding claims,
wherein the covering layer comprises at least one of a metal layer, a ceramic layer, a magnetic layer, a glass layer, and a composite layer formed of an inorganic layer and an organic layer.

15. The substrate of any one of claims 1 to 13,
wherein the covering layer comprises one of a metal layer including at least one of a component selected from Ni (nickel), Fe (iron), Cu (copper), Ti (titanium), P (phosphorus), Co (cobalt), Si (silicon), Sn (tin), Pd (palladium), Zn (zinc), Ga (gallium), Ge (germanium), and Mn (manganese); a ceramic layer; and a magnetic layer.

16. The substrate of any one of the preceding claims,
wherein the covering layer comprises a plurality of layers whose components are different each other.

17. The substrate of any one of the preceding claims,
wherein a component of the covering layer changes gradually from a surface of the covering layer facing the base plate to a top surface of the covering layer.

18. The substrate of any one of the preceding claims,
wherein a surface of the covering layer facing the base plate has hardness lower than that of a top surface of the covering layer.

19. The substrate of any one of the preceding claims,
wherein the covering layer has a surface roughness Ra of 1 nm or less.

20. The substrate of any one of the preceding claims,
wherein the covering layer comprises a polished surface.

21. The substrate of any one of the preceding claims,
wherein a center portion of the base plate is thicker than a peripheral portion of the base plate.

22. The substrate of claim 21,
wherein a thickness of the base plate gradually reduces from the center portion to the peripheral portion.

23. A producing method of a substrate for a magnetic information recording medium, the producing method comprising the steps of:
forming a base plate in a disk shape comprising a resin base member;
forming a covering layer on at least one surface of the base plate; and
polishing a surface of the covering layer.

24. A producing method of a substrate for a magnetic information recording medium, the producing method comprising the steps of:
forming a base plate in a disk shape comprising a resin base member;
forming an intermediate layer on at least one surface of the base plate;
forming a covering layer on the intermediate layer; and
polishing a surface of the covering layer.
